Europäisches Patentamt

European Patent Office

Office européen des brevets

(19)

(11) Veröffentlichungsnummer: **0 313 872 B1**

# (12) EUROPÄISCHE PATENTSCHRIFT

(45) Veröffentlichungstag der Patentschrift:
24.07.91 Patentblatt 91/30

(51) Int. Cl.⁵: **B23Q 11/08**

(21) Anmeldenummer: **88116323.2**

(22) Anmeldetag: **03.10.88**

(54) **Werkzeugmaschine.**

(30) Priorität: **14.10.87 DE 3734722**

(43) Veröffentlichungstag der Anmeldung:
**03.05.89 Patentblatt 89/18**

(45) Bekanntmachung des Hinweises auf die
Patenterteilung:
**24.07.91 Patentblatt 91/30**

(84) Benannte Vertragsstaaten:
**CH DE ES FR GB IT LI SE**

(56) Entgegenhaltungen:
**CH-A- 654 237**
**DE-C- 3 533 089**
**GB-A- 609 181**
**GB-A- 2 080 908**
**US-A- 2 443 734**

(73) Patentinhaber: **Chiron-Werke GmbH & Co. KG**
**Talstrasse 33**
**W-7200 Tuttlingen (DE)**

(72) Erfinder: **Winkler, Hans-Henning, Dr.**
**Brunnentalstrasse 88**
**W-7200 Tuttlingen (DE)**
Erfinder: **Rütschle, Eugen**
**Schönenbergstrasse 20**
**W-7202 Mühlheim (DE)**

(74) Vertreter: **Witte, Alexander, Dr.-Ing.**
**Witte, Weller & Hilgenfeldt Patent- und**
**Rechtsanwälte Augustenstrasse 7**
**W-7000 Stuttgart 1 (DE)**

## Beschreibung

Die Erfindung betrifft eine Werkzeugmaschine mit einem um eine vertikale Achse um jeweils vorzugsweise 180° hin- und herdrehbaren Werkstücktisch, mit einem den Werkstücktisch überspannenden Balken und mit von dem Balken nach unten hängenden, um eine zu einem Durchmesser des Werkstücktischs parallele Achse verschwenkbaren Spritzschutzelementen, die eine Bearbeitungsseite des Werkstücktischs im Arbeitsbereich eines Spindelstocks von einer Bestückungsseite trennen.

Eine derartige Werkzeugmaschine ist aus der US-A 2443734 bekannt.

Bei der bekannten Werkzeugmaschine sind die Spritzschutzelemente als starre Pendelklappen ausgebildet, die mittels Scharnierbändern an dem horizontal über dem Werkstücktisch angeordneten Balken angeschlagen sind. Die Spritzschutzelemente erstrecken sich von dem Balken bis unmittelbar oberhalb der Oberfläche des Werkstückstischs. Während der Bearbeitung eines Werkstücks auf der Bearbeitungsseite schützen die Spritzschutzelemente die gegenüberliegende Bestückungsseite vor herumfliegenden Materialspänen und herumspritzendem Bohröl, so daß auf der Bestückungsseite ungehindert zunächst das zuvor bearbeitete Werkstück entnommen und ein neues, unbearbeitetes Werkstück aufgespannt werden kann. Nach Beendigung eines Bearbeitungszyklus wird der Werkstücktisch um 180° gedreht, damit das gerade bearbeitete Werkstück von der Bearbeitungsseite auf die Bestückungsseite gelangt und das unbearbeitete Werkstück von der Bestückungsseite auf die Bearbeitungsseite. Bei der bekannten Werkzeugmaschine stoßen die Werkstücke während des Verschwenkens des Werkstücktischs die Spritzschutzelemente selbsttätig auf, die mit ihrer Unterkante über die Außenkontur der Werkstücke rutschen und hinter den Werkstücken wieder in ihre senkrechte Lage zurückschwenken.

Bei der bekannten Werkzeugmaschine wird der Werkstücktisch in einer Drehrichtung um jeweils 180° weitergedreht, so daß die beiden Oberflächenhälften des Werkstücktischs nacheinander alternativ auf die Bestückungsseite bzw. die Bearbeitungsseite gelangen.

Die bekannte Werkzeugmaschine hat jedoch den Nachteil, daß beim Verschwenken des Werkstücktischs die relativ groß ausgebildeten Spritzschutzelemente jeweils um große Winkel und große Strecken ausgelenkt werden und zwar umso mehr, je größer die Außenabmessungen der zu bearbeitenden Werkstücke sind. Dies bedeutet, daß beim schnellen Verschwenken der Spritzschutzelemente zumindest Bohröl, u.U. sogar Materialspäne nach außen zum Benutzer der Werkzeugmaschine hin geschleudert werden können.

Außerdem sind bei den angestrebten geringen Werkstückwechselzeiten die Spritzschutzelemente einer erheblichen mechanischen Belastung ausgesetzt, weil bei jedem Verschwenken des Werkstücktischs die Werkstücke mit hoher Geschwindigkeit gegen die Spritzschutzelemente prallen und diese an immer derselben Stelle aufschwenken.

Schließlich ist bei der bekannten Werkzeugmaschine von Nachteil, daß das jeweils gleichsinnige Verschwenken des Werkstücktischs eine aufwendige Lagerregelung voraussetzt, weil bereits kleinste Winkelfehler sich beim fortwährenden Verschwenken des Werkstücktischs zu einem erheblichen Gesamtfehler addieren würden.

Aus der DE-PS 3533089 ist eine Werkzeugmaschine mit einem Spritzschutzelement bekannt, das als starre Spritzschutzwand ausgebildet ist, die vertikal von der Oberfläche des Werkstücktischs absteht. Der Werkstücktisch in dieser Werkzeugmaschine wird jeweils gegenläufig um 180° verdreht, so daß sich Winkelfehler beim fortwährenden Verdrehen nicht addieren können. Die Spritzschutzwand ist mittels einer Mechanik über der Oberfläche des Werkstücktischs in einer horizontalen Richtung derart verschiebbar, daß beim Verschwenken des Werkstücktischs die Bearbeitungsseite jeweils einen größeren Anteil der Werkstücktischoberfläche einnimmt als die Bestückungsseite. Diese bekannte Werkzeugmaschine hat jedoch den Nachteil, daß zum horizontalen Verfahren der Spritzschutzwand eine zusätzliche Mechanik erforderlich ist, die beim Langzeiteinsatz der Werkzeugmaschine und bei schnellen Werkstückwechselvorgängen ebenfalls hohen mechanischen Beanspruchungen unterliegt.

Der Erfindung liegt demgegenüber die Aufgabe zugrunde, eine Werkzeugmaschine der eingangs genannten Art dahingehend weiterzubilden, daß bei geringstmöglichen Verschleiß der verschwenkbaren Spritzschutzelemente eine effektive Abdichtung der Bestückungsseite gegenüber der Bearbeitungsseite möglich ist.

Diese Aufgabe wird erfindungsgemäß dadurch gelöst, daß der Werkstücktisch starr mit einer entlang eines Durchmessers des Werkstücktischs verlaufenden vertikalen Spritzschutzwand verbunden ist und daß die Spritzschutzelemente die Spritzschutzwand zu beiden Seiten der vertikalen Achse auf gegenüberliegenden Seiten überlappen und mit ihren Unterkanten oberhalb von auf dem Werkstücktisch aufgespannten Werkstücken angeordnet sind.

Die der Erfindung zugrundeliegende Aufgabe wird auf diese Weise vollkommen gelöst, weil die Spritzschutzelemente nicht mehr von den Werkstücken verschwenkt werden sondern nur noch eine geringfügige Schwenkbewegung um die horizontale Achse ausüben, die durch die Dicke der Spritzschutzwand bestimmt ist. Selbst bei einem Langzeiteinsatz der erfindungsgemäßen Werkzeugmaschine werden die Spritzschutzelemente daher nicht abgenutzt, weil sie nur verhältnismäßig geringen Betätigungskräften ausgesetzt werden.

Bei einer bevorzugten Ausgestaltung der Erfindung ist der Balken über eine weitere Spritzschutzwand nach oben mit einem den Werkstücktisch überspannenden Portal verbunden.

Diese Maßnahme hat den Vorteil, daß nahezu die gesamte Spritzschutzeinrichtung aus starren, durchgehenden Wänden besteht, die beispielsweise transparent ausgebildet werden können, so daß bei optimaler Abdichtung der Bestückungsseite gegenüber der Bearbeitungsseite eine visuelle Beobachtung der Bearbeitungsseite möglich ist, während die Spritzschutzelemente nur noch eine Abdichtfunktion zwischen den beiden Spritzschutzwänden ausüben.

Bei einer bevorzugten Weiterbildung dieser Variante ist das Portal im Abstand von der vertikalen Achse oberhalb der Bestückungsseite angeordnet.

Diese Maßnahme hat den Vorteil, daß die weitere Spritzschutzwand sich schräg nach vorne und oben zur Bestückungsseite hin erstreckt, so daß auf der Bearbeitungsseite ein Spindelstock mit einem Werkzeug nahe an die Spritzschutzwand herangefahren werden kann, weil der nach oben in der Regel ausladende Spindelstock in den Raum ausreichen kann, der von der schräg nach oben verlaufenden weiteren Spritzschutzwand auf der Bearbeitungsseite freigegeben wird.

Bei einer weiteren bevorzugten Ausgestaltung der Erfindung sind die Spritzschutzelemente symmetrisch zur vertikalen Achse um eine Breite beabstandet, die der Dicke der Spritzschutzwand entspricht.

Diese Maßnahme hat den Vorteil, daß die seitlichen Ränder der Spritzschutzelemente im Bereich der vertikalen Achse beim Verschwenken des Werkstücktischs nahezu überhaupt nicht mehr mechanisch belastet werden, weil die Spritzschutzwand sich in der Lücke zwischen den Spritzschutzelementen frei verdrehen kann. Da die Spritzschutzwand z.B. aus nur wenige Millimeter dickem Acrylglas oder Blech ausgebildet sein kann, kann die Lücke zwischen den Spritzschutzelementen so schmal gestaltet werden, daß dies unter Abdichtungsgesichtspunkten nicht stört.

Schließlich ist eine weitere Ausführungsform der Erfindung bevorzugt, bei der die Spritzschutzelemente als wenige Zentimeter hohe Lappen ausgebildet sind.

Diese Maßnahme hat den Vorteil, daß, wie bereits erwähnt, die Funktion der Spritzschutzelemente vollkommen auf die eine Abdichtung zwischen der Spritzschutzwand und der weiteren Spritzschutzwand reduziert wird. Von besonderem Vorteil ist dabei jedoch, daß der Werkstücktisch von einer Bauart sein kann, bei der der Werkstücktisch während des Verschwenkens um einige Millimeter angehoben wird, weil diese Hubbewegung des Werkstücktischs bereits bei wenigen Zentimeter hohen Lappen ohne Einfluß bleibt. Das Anheben des Werkstücktischs während des Verschwenkens hat den Vorteil, daß der Werkstücktisch in seinen Endstellungen formschlüssig verrastet werden kann, beispielsweise in einer Hirth-Verzahnung, so daß eine aufwendige Lagemessung und -regelung entbehrlich ist.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen :

Fig. 1 eine Seitenansicht eines Teils einer erfindungsgemäßen Werkzeugmaschine in Richtung der Linie I-I von Fig. 2 ;

Fig. 2 eine Frontalansicht der Werkzeugmaschine gemäß Fig. 1, von der Bearbeitungsseite eines Werkstücktischs aus gesehen ;

Fig. 3 bis 5 drei Phasenbilder zur Erläuterung der Kinematik der erfindungsgemäßen Werkzeugmaschine.

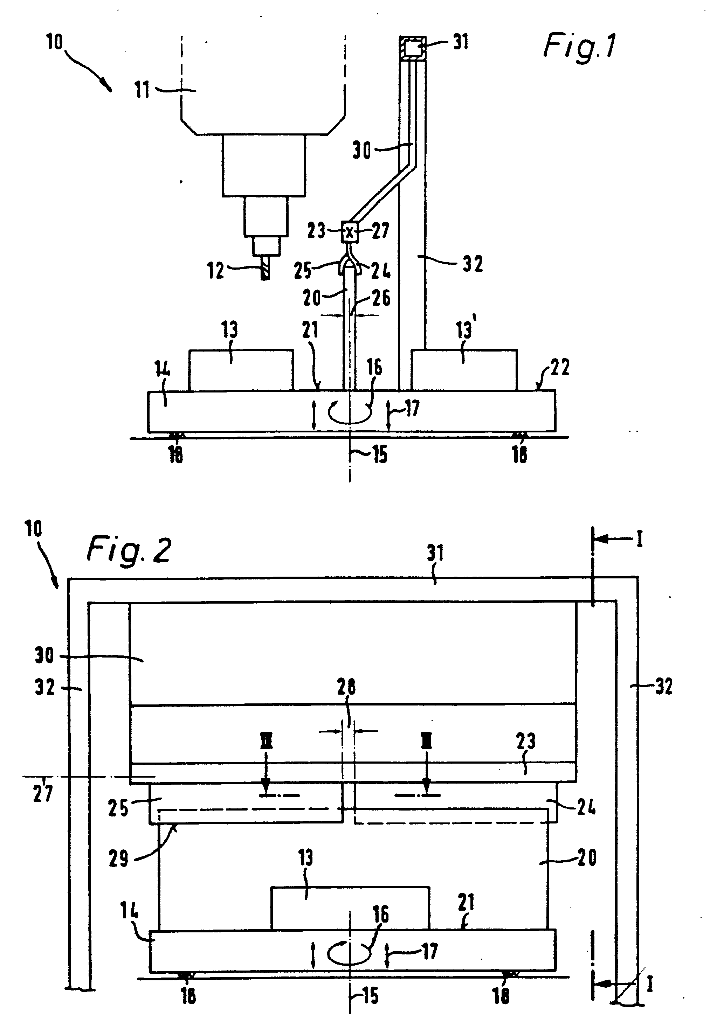

In Fig. 1 bezeichnet 10 insgesamt eine Werkzeugmaschine mit einem vertikalachsigen Spindelstock 11, in dessen Spindel ein Werkzeug 12 eingespannt ist. Werkstücke 13, 13' sind auf einem Werkstücktisch 14 aufgespannt, der um eine vertikale Achse 15 in Richtung eines Pfeils 16 um jeweils 180° hin- und herverdrehbar ist.

Mit einem weiteren Pfeil 17 ist angedeutet, daß der Werkstücktisch 14 eine geringfügige Hubbewegung von beispielsweise 5 mm ausführen kann, damit der Werkstücktisch 14 während des Verdrehens aus formschlüssigen Rasten, beispielsweise einer bei 18 angedeuteten Hirth-Verzahnung herausgehoben werden kann, um dann bei Erreichen der um 180° verdrehten nächsten Endstellung wieder in diese Rasten durch Absenken des Werkstücktischs 14 in Richtung des Pfeils 17 einfallen zu können.

Der Werkstücktisch 14 ist mit einer Spritzschutzwand 20 starr verbunden, die sich entlang eines Durchmessers des Werkstücktischs 14 vertikal nach oben erstreckt. Die Spritzschutzwand 20, die vorzugsweise aus einem Acrylglas besteht, unterteilt die Oberfläche des Werkstücktischs 14 in eine Bearbeitungsseite 21 im Arbeitsbereich des Spindelstocks 11 und eine Bestückungsseite 22 auf der gegenüberliegenden Seite.

Oberhalb des Werkstücktischs 14 erstreckt sich ein Balken 23, der vorzugsweise die vertikale Achse 15 schneidet. An der Unterseite des Balkens 23 sind ein erstes Spritzschutzelement 24 und ein zweites Spritzschutzelement 25 symmetrisch zur vertikalen Achse 15 angeordnet. Die Spritzschutzelemente 24, 25 können als elastische Lappen aus transparentem Kunststoff von einigen Zentimetern Höhe, beispielsweise 5 oder 10 cm Höhe ausgebildet sein, sie können aber auch als starre Bleche, Acrylglasscheiben oder dgl. ausgebildet sein, die mittels Scharnierbändern an der Unterseite des Balkens 23 angeordnet sind. In der in den Fig. 1 und 2 dargestellten Stellung überlappt das erste Spritzschutzelement 24 die Spritzschutzwand 20 auf der Bestückungsseite 22 und das zweite Spritzschutzelement 25 überlappt die Spritzschutzwand 20 auf der Bearbeitungsseite 21. Die Spritzschutzelemente 24, 25 sind demzufolge um einen Verschwenkweg gegeneinander verschwenkt, der eine Dicke 26 der Spritzschutzwand 20 entspricht. Mit 27 ist eine horizontale Achse bezeichnet, um die die Spritzschutzelemente 24, 25 in der geschilderten Weise verschwenkbar sind.

Die Spritzschutzelemente 24, 25 sind im Bereich der vertikalen Achse 15 um eine Breite 28 voneinander beabstandet, die vorzugsweise so groß wie die Dicke 26 der Spritzschutzwand 20 ist.

Die Spritzschutzelemente 24, 25 erstrecken sich vom Balken 24 so weit nach unten, daß ihre Unterkante 29 immer oberhalb der Werkstücke 13 liegt.

Oberhalb des Balkens 23 erstreckt sich eine weitere Spritzschutzwand 30, die ebenfalls aus Acrylglas bestehen kann. Die weitere Spritzschutzwand 30 verläuft vom Balken 21 schräg nach oben und zwar in Richtung auf die Bestückungsseite 22 hin und mündet schließlich an ihrer Oberseite in einem Portal 31, das den Werkstücktisch 14 überspannt und seitlich von Stützen 32 gehalten ist. Durch diese Formgebung der weiteren Spritzschutzwand 30 kann der Spindelstock 11, wie aus Fig. 1 deutlich wird, weit nach rechts fahren, ohne daß er in seinem oberen, ausladenden Bereich an die weitere Spritzschutzwand 30 anstößt. Auf diese Weise kann das Werkzeug 12 bis in die unmittelbare Nähe der Spritzschutzwand 20 verfahren werden.

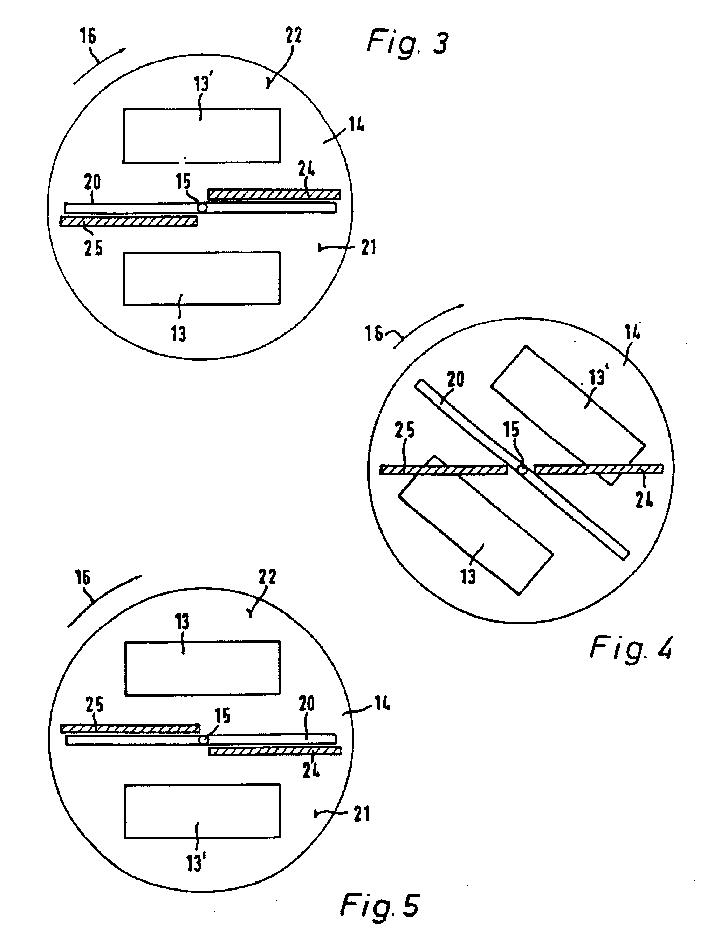

Die Wirkungsweise der vorstehend geschilderten Anordnung soll nun anhand der Draufsichten der Fig. 3 bis 5 erläutert werden.

Fig. 3 zeigt in einer Draufsicht nochmals den in den Fig. 1 und 2 in Seitenansicht bereits dargestellte eine Endstellung des Werkstücktischs 14. In dieser einen Endstellung befindet sich das Werkstück 13 auf der Bearbeitungsseite 21 und das Werkstück 13' auf der Bestückungsseite 22. Das erste Spritzschutzelement 24 überlappt die Spritzschutzwand 20 auf der Bestückungsseite 22 und das zweite Spritzschutzelement 25 überlappt die Spritzschutzwand 20 auf der Bearbeitungsseite 21.

Wird nun der Werkstücktisch 14 in Richtung des Pfeils 16 verdreht, so dreht sich die Spritzschutzwand 20 in ihrem Bereich in der Nähe der vertikalen Achse 15 in der Lücke zwischen den Spritzschutzelementen 24 und 25. Diese schwenken zunächst unter Schwerkrafteinfluß in eine Lage zurück, in der sie mit einem Durchmesser des Werkstücktischs 14 fluchten, wie deutlich aus Fig. 4 erkennbar wird. Beim Verschwenken des Werkstücktischs 14 fahren die Werkstücke 13 und 13' unter den Spritzschutzelementen 24 und 25 hindurch, weil sich deren Unterkante 29, wie bereits erwähnt, oberhalb der Werkstücke 13 und 13'

befindet.

Bei Erreichen der in Fig. 5 gezeigten anderen Endstellung befindet sich das Werkstück 13' nunmehr auf der Bearbeitungsseite 21 und das Werkstück 13 auf der Bestückungsseite 22.

Das erste Spritzschutzelement 24 überlappen nun die Spritzschutzwand 20 auf der Bearbeitungsseite 21 und das zweite Spritzschutzelement 25 überlappt die Spritzschutzwand 20 auf der Bestückungsseite 22.

Insgesamt haben daher die Spritzschutzelemente 24, 25 nur eine geringfügige Schwenkbewegung durchgeführt, die der Dicke 26 der Spritzschutzwand 20 entspricht. Da die Lücke zwischen den Spritzschutzelementen 24, 25 eine Breite 28 aufweist, die der Dicke 26 der Spritzschutzwand 20 entspricht, wurde beim Verschwenken des Werkstücktischs 14 auch von der Spritzschutzwand 20 keine Kraft auf die inneren Ränder der Spritzschutzelemente 24 und 25 ausgeübt.

Die in den Fig. 1 bis 5 dargestellte Anordnung ist eine bevorzugte Ausgestaltung der Erfindung, bei der die Spritzschutzelemente 24 und 25 nur eine Dichtfunktion zwischen den Spritzschutzwänden 20 und 30 ausüben und in ihrer Höhe mit wenigen Zentimetern nur so groß ausgebildet sind, daß bei der erforderlichen Verschwenkbewegung keine zu großen Verschwenkwinkel auftreten, andererseits aber der Werkstücktisch 14 die erforderliche Hubbewegung in Richtung des Pfeils 16 während des Verschwenkens ausüben kann.

Es versteht sich jedoch, daß auch andere Ausgestaltungen denkbar sind, bei denen beispielsweise die Spritzschutzelemente 24, 25 unmittelbar am Portal 31 aufgehängt sind. Die Spritzschutzelemente können bei dieser Variante als einstückiger Vorhang ausgebildet sein, der nur im unteren Bereich mit einem mittleren Schlitz versehen ist, so daß die Spritzschutzwand 20 in Verbindung mit den beiden unteren Enden beidseits des Schlitzes die erforderliche Schwenkbewegung ausführen kann.

**Patentansprüche**

1. Werkzeugmaschine mit einem um eine vertikale Achse (15) um jeweils vorzugsweise 180° hin- und herdrehbaren Werkstücktisch (14), mit einem den Werkstücktisch (14) überspannenden Balken (23) und mit von dem Balken (23) nach unten hängenden, um eine zu einem Durchmesser des Werkstücktischs (14) parallele Achse (27) verschwenkbaren Spritzschutzelementen (24, 25), die eine Bearbeitungsseite (21) des Werkstücktischs (14) im Arbeitsbereich eines Spindelstocks (11) von einer Bestückungsseite (22) trennen, dadurch gekennzeichnet, daß der Werkstücktisch (14) starr mit einer entlang eines Durchmessers des Werkstücktischs (14) verlaufenden

vertikalen Spritzschutzwand (20) verbunden ist und daß die Spritzschutzelemente (24, 25) die Spritzschutzwand (20) zu beiden Seiten der vertikalen Achse (15) auf gegenüberliegenden Seiten überlappen und mit ihren Unterkanten (29) oberhalb von auf dem Werkstücktisch (14) aufgespannten Werkstücken (13, 13') angeordnet sind.

2. Werkzeugmaschine nach Anspruch 1, dadurch gekennzeichnet, daß der Balken (23) über eine weitere Spritzschutzwand (30) nach oben mit einem den Werkstücktisch (14) überspannenden Portal (31) verbunden ist.

3. Werkzeugmaschine nach Anspruch 2, dadurch gekennzeichnet, daß das Portal (31) im Abstand von der vertikalen Achse (15) oberhalb der Bestückungsseite (22) angeordnet ist.

4. Werkzeugmaschine nach einem der Ansprüche 1 bis 3, dadurch gekennzeichnet, daß die Spritzschutzelemente (24, 25) symmetrisch zur vertikalen Achse (15) um eine Breite (28) beabstandet sind, die der Dicke (26) der Spritzschutzwand (20) entspricht.

5. Werkzeugmaschine nach einem der Ansprüche 2 bis 4, dadurch gekennzeichnet, daß die Spritzschutzelemente (24, 25) als wenige Zentimeter hohe Lappen ausgebildet sind.

## Revendications

1. Machine-outil dotée d'une table porte-pièce (14) pouvant effectuer alternativement dans un sens et dans l'autre des rotations de préférence de 180°, d'une traverse (23) agencée au-dessus de la table porte-pièce (14) et d'éléments de protection contre les projections (24, 25), suspendus à la traverse (23) et pivotant autour d'un axe (27) parallèle à un diamètre de la table porte-pièce (14), qui séparent un côté d'usinage (21) de la table porte-pièce (14), dans la zone de travail d'une poupée (11), d'un côté de chargement (22), caractérisée en ce que la table porte-pièce (14) est reliée de façon rigide à une paroi de protection contre les projections (20) verticale, parallèle à l'un des diamètres de la table porte-pièce (14), en ce que les éléments de protection contre les projections (24, 25) chevauchent la paroi de protection contre les projections (20) des deux côtés de l'axe vertical (15) sur des côtés opposés et en ce que leur bord inférieur (29) se trouve au-dessus des pièces (13, 13') montées sur la table porte-pièce (14).

2. Machine-outil selon la revendication 1, caractérisée en ce que la traverse (23) est reliée, vers le haut, par l'intermédiaire d'une autre paroi de protection contre les projections (30), à un portique (31) qui enjambe la table porte-pièce (14).

3. Machine-outil selon la revendication 2, caractérisée en ce que le portique (31) est agencé à distance de l'axe vertical (15), au-dessus du côté de chargement (22).

4. Machine-outil selon l'une des revendications 1 à 3, caractérisée en ce que les éléments de protection contre les projections (24, 25) sont espacés, de façon symétrique par rapport à l'axe vertical (15), d'une largeur (28), qui correspond à l'épaisseur (26) de la paroi de protection contre les projections (20).

5. Machine-outil selon l'une des revendications 2 à 4, caractérisée en ce que les éléments de protection contre les projections (24, 25) se présentent sous la forme de lèvres hautes de quelques centimètres.

## Claims

1. Machine tool, comprising a workpiece table (14) being pivotable about a vertical axis (15) by preferably 180° each to and fro, a beam (32) spanning the workpiece table (14), and splash-guard elements (24, 25) hanging downwardly from the beam (23) and being pivotable about an axis (27) extending parallel to a diameter of the workpiece table (14), the splash-guard elements (24, 25) separating a processing side (21) of the workpiece table (24) within the operational area of a spindle stock (11) from a mounting side (22), characterized in that the workpiece table (14) is rigidly connected with a splash-guard wall (20) extending vertically along a diameter of the workpiece table (14), and that the splash-guard elements (24, 25) overlap the splash-guard wall (20) on both sides of the vertical axis (15) on opposite sides with their lower edges (29) being arranged above workpieces (13, 13') mounted on the workpiece table (14).

2. The machine tool of claim 1, characterized in that the beam (23) is connected to a portal (31) via a further splash-guard wall (30), the portal (31) spanning the workpiece table (14).

3. The machine tool of claim 2, characterized in that the portal (31) is arranged at a distance from the vertical axis (15) above the processing side (22).

4. The machine tool of any of claims 1-3, characterized in that the splash-guard elements (24, 25) are arranged symmetrically to the vertical axis (15) and distant from each other by a width (28) corresponding to the thickness (26) of the splash-guard wall (20).

5. The machine tool of any of claims 2-4, characterized in that the splash-guard elements (24, 25) are designed as flaps being a few centimeters high.

Fig.1

Fig.2

Fig. 3

Fig. 4

Fig. 5